(19) Europäisches Patentamt
European Patent Office
Office européen des brevets

(11) **EP 2 554 875 A1**

(12) **EUROPEAN PATENT APPLICATION**
published in accordance with Art. 153(4) EPC

(43) Date of publication:
**06.02.2013 Bulletin 2013/06**

(21) Application number: **11759285.7**

(22) Date of filing: **17.03.2011**

(51) Int Cl.:
***F16H 61/02*** *(2006.01)*

(86) International application number:
**PCT/JP2011/056323**

(87) International publication number:
**WO 2011/118479 (29.09.2011 Gazette 2011/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.03.2010 JP 2010071248**

(71) Applicant: **Aisin Seiki Kabushiki Kaisha
Aichi 448-8650 (JP)**

(72) Inventor: **HANEDA, Yoshitomi
Kariya-shi
Aichi 448-8650 (JP)**

(74) Representative: **Kramer - Barske - Schmidtchen
Landsberger Strasse 300
80687 München (DE)**

(54) **GEAR-SHIFT CONTROL DEVICE FOR AUTOMATIC TRANSMISSION**

(57)     Provided is a gear-shift control apparatus for an automatic transmission, which is capable of switching modes and which makes it possible to improve operability, fuel consumption, drivability and convenience, and to simplify control. The gear-shift control apparatus comprises: a shift-hold-level-calculation unit for calculating, in accordance with operation of a driver, a shift hold level that varies between 0% representing a complete automatic transmission state and 100% representing a complete manual transmission state; and a gear-shift processing unit for performing gear-shift control processing for an automatic transmission (2) in accordance with the shift hold level calculated by the shift-hold-level-calculation unit.

FIG.1                                    （EXAMPLE 1）

**Description**

TECHNICAL FIELD

This application claims priority based on Japanese Patent Application No 2010-071248 filed on March 26, 2010, the entire disclosure of the aforesaid application being incorporated herein by reference thereto. The present invention relates to a gear-shift control apparatus for an automatic transmission that is capable of switching between an automatic-transmission mode and a manual-transmission mode.

BACKGROUND

In recent years, there are automatic transmissions that, in addition to an automatic-transmission mode that automatically changes speeds according to the state (conditions) of the vehicle (for example, the vehicle speed, throttle opening, and the like), is provided with a manual-transmission mode in which the driver shifts gears using manual operation. Switching between the automatic-transmission mode and the manual-transmission mode of this kind of automatic transmission is performed manually by the driver.

For example, in the gear-shift control apparatus for an automatic transmission disclosed in Patent Literature 1, an apparatus is disclosed wherein switching between the automatic-transmission mode and the manual-transmission mode can be selectively performed based on a switching signal from a transmission-mode switch, and when a down-shift operation switch that is provided on a steering wheel is operated while in the automatic-transmission mode, the transmission mode is switched to the manual-transmission mode; then after that, when an up-shift switch for returning to the automatic-transmission mode that is provided on a steering wheel is operated while in the manual-transmission mode, the transmission mode is switched to the automatic-transmission mode. By this provision, the driver is able to switch between the automatic-transmission mode and manual-transmission mode without having to remove his/her hands from the steering wheel, and thus it is possible to improve the ease of operation and safety of the shifting operation.

Moreover, in the gear-shift control apparatus for an automatic transmission disclosed in Patent Literature 2, an apparatus is disclosed that, together with being provided with an automatic-transmission control method that sets a target transmission gear ratio according to the vehicle speed and engine load, is provided with an up-shifting instruction method and down-shifting instruction method that give instructions for up-shifting or down-shifting according to operation by the driver, a manual-transmission control method that sets a target transmission gear ratio based on a signal from the up-shifting instruction method or down-shifting instruction method, and a transmission mode switching method that selectively switches between the automatic-transmission mode and manual-transmission mode; wherein, when the up-shifting instruction method and the down-shifting instruction method are operated at the same time, the transmission-mode switching method selectively switches between the automatic-transmission mode and the manual-transmission mode. As a result, it is possible for the driver to switch the transmission mode without having to take his/her hands off of the steering wheel.

[CITATION LIST]

[Patent Literature]

[Patent Literature 1] Japanese Patent Application No. 2002-349687
[Patent Literature 2] Japanese Patent Application No. H9-203457

SUMMARY OF INVENTION

[Technical Problem]

The entire contents of the aforesaid Patent Literatures 1 and 2 are incorporated herein by reference thereto. The following analysis is given in accordance to the present invention.

In the shift control apparatus for an automatic transmission according to Patent Literatures 1 and 2, it is necessary for the driver to perform some kind operation when switching from the manual-transmission (manual) mode to the automatic-transmission mode, so the following problems exist. For example, there is an occurrence where a vehicle may travel unnecessarily in a low gear because the driver forgot to return to the automatic-transmission mode, so there is a possibility that fuel efficiency will become poor. Moreover, in a case such as where it is desired to perform an engine brake by down-shifting manually before turning at a corner, and then to automatically shift after making the turn at the corner, it is always necessary for the driver to perform a specified operation to return to the automatic-transmission mode after coming out of the turn, so the operation becomes troublesome.

Furthermore, in the gear-shift control apparatus for an automatic transmission according to Patent Literatures 1 and 2, for example, when switching to the automatic-transmission mode in a situation such as when the vehicle is traveling at a high speed (for example, a vehicle speed at which a vehicle would be traveling in 5th gear in the case of an automatic transmission) in the manual-transmission (manual) mode and the transmission speed is held in a low gear (for example 2nd gear), shifting from 2nd gear to 5th gear is performed at once, so the following problems exist. For example, in the case of a vehicle that is traveling at constant speed in 2nd gear, by shifting to 5th gear by switching from the manual-transmission mode to the automatic-transmission mode, the engine rotational speed (rpm) suddenly drops, and the engine torque suddenly increases, so it becomes necessary to adjust acceleration, so drivability and the handling feel worsen. Moreover, in the case of accelerating in 2nd gear, by shifting to 5th gear by switching from the manual-transmission mode to the automatic-transmission mode, the drive power is suddenly lost and the acceleration power suddenly drops, so drivability worsens. In the case of reducing speed in 2nd gear (engine brake), by shifting to 5th gear by shifting from the manual-transmission mode to the automatic-transmission mode, the engine brake is suddenly lost, and the deceleration power suddenly drops, so drivability worsens.

Moreover, in the gear-shift control apparatus for an automatic transmission according to Patent Literatures 1 and 2, it is necessary to provide control for both the automatic-transmission mode and the manual-transmission (manual) mode, so control becomes complex.

Furthermore, in the gear-shift control apparatus for an automatic transmission according to Patent Literature 1, the operation of the up-shifting switch causes switching to the automatic-transmission mode, so it is not possible to up-shift as in the manual-transmission mode, which offers inconvenience.

The object of the present invention is to provide a gear-shift control apparatus for an automatic transmission that is capable of switching between the automatic-transmission mode and the manual-transmission mode while at the same time is capable of improving ease of operation, fuel efficiency, drivability and convenience, and simplifying control.

[Solution to Problem]

A gear-shift control apparatus for an automatic transmission according to a first aspect of the present invention, comprises: a shift-hold-level-calculation unit that calculates a shift hold level that varies between 0% representing a complete automatic transmission state and 100% representing a complete manual transmission state according to operation by a driver; and a gear-shift processing unit that controls shifting of an automatic transmission based on the shift hold level that was calculated by the shift-hold-level-calculation unit.

In the gear-shift control apparatus for an automatic transmission of the present invention, preferably the shift-hold-level-calculation unit performs calculation so that the shift hold level is forcibly changed to 100% when an ON operation is performed by a shift switch or a shift lever; and the gear-shift processing unit performs gear-shift control of the automatic transmission when an ON operation is performed by the shift switch or shift lever.

In the gear-shift control apparatus for an automatic transmission of the present invention, preferably the gear-shift control apparatus comprises a sensor that detects the accelerator opening degree (i.e., position); and the shift-hold-level-calculation unit performs calculation so that when the accelerator opening degree that is detected by the sensor is equal to or greater than a threshold value, and the shift hold level is greater than 0%, the shift hold level is changed so as to approach (i.e., in a direction toward) 0%; and performs calculation so that when the accelerator opening degree that is detected by the sensor is less than the threshold value, and the shift hold level is greater than 0% and less than 100%, the shift hold level is changed so as to approach (i.,e., in a direction toward) 100%.

In the gear-shift control apparatus for an automatic transmission of the present invention, preferably the gear-shift control apparatus comprises a sensor that detects the accelerator opening degree; and the shift-hold-level-calculation unit performs calculation so that when the accelerator opening degree that is detected by the sensor is equal to or greater than a threshold value, and the shift hold level is greater than 0%, the shift hold level is changed so as to approach (i.e., in a direction toward) 0% according to the amount of change in the accelerator opening degree; and performs calculation so that when the accelerator opening degree that is detected by the sensor is less than the threshold value, and the shift hold level is greater than 0% and less than 100%, the shift hold level is changed so as to approach (i.e., in a direction toward) 100%.

In the gear-shift control apparatus for an automatic transmission of the present invention, preferably the gear-shift control apparatus comprises a sensor that detects the accelerator opening degree; and the shift-hold-level-calculation unit calculates, based on vehicle speed and gradient (incline) of the road, an upper-limit value and a lower-limit value for the accelerator opening degree necessary for a vehicle to travel at constant speed; performs calculation so that when the accelerator opening degree that is detected by the sensor is equal to or greater than upper-limit value, and the shift hold level is greater than 0% and less than 100%, the shift hold level is changed according to a difference between the accelerator opening degree and the upper-limit value, and the amount of change in the accelerator opening degree; performs calculation so that when the accelerator opening degree is between the upper-limit value and the lower-limit value, and the shift hold level is greater than 0% and less than 100%, the shift hold level is changed according to the amount of change in the accelerator opening degree; and performs calculation so that when the accelerator opening degree is equal to or less then the lower-limit value, and the shift hold level is greater than 0% and less than 100%, the shift hold level is changed according to a difference between the accelerator opening degree and the lower-limit value, and an absolute value of the amount of change in the accelerator opening degree.

In the gear-shift control apparatus for an automatic transmission of the present invention, preferably the gear-shift control apparatus comprises a sensor that detects the accelerator opening degree; and the gear-shift processing unit, based on the shift hold level that was calculated by the shift-hold-level calculation unit, selects a corresponding shifting line from among a plurality of preset shifting lines, and based on the selected shifting line, performs gear-shift control according to the accelerator opening degree detected by the sensor, and vehicle speed.

In the gear-shift control apparatus for an automatic transmission of the present invention, preferably the gear-shift control apparatus comprises a sensor that detects the accelerator opening degree; and the gear-shift processing unit, based on a plurality of preset shifting lines, calculates shifting points according to the shift hold level that was calculated by the shift-hold-level-calculation unit, and the accelerator opening degree that was detected by the sensor, and selects a corresponding shifting line from among a plurality of preset shifting lines, and based on the calculated shifting point(s), performs gear-shift control according to vehicle speed.

In the gear-shift control apparatus for an automatic transmission of the present invention, preferably the gear-shift control apparatus comprises a sensor that detects the accelerator opening degree; and the gear-shift processing unit, based on the shift hold level that was calculated by the shift-hold-level-calculation unit, corrects the accelerator opening degree that was detected by the sensor, and based on preset shifting lines, performs gear-shift control according to the corrected accelerator opening degree and vehicle speed.

[Advantageous Effects of Invention]

With the present invention, the switching-over of transmission modes is performed automatically according to a shift hold level that is calculated and set automatically, so there is no need for troublesome operation when changing modes, and it is possible to improve operability and fuel efficiency. Moreover, switching the transmission mode is performed in multi-stages or continuously according to a shift hold level that is calculated and set automatically, so there is no such change (sudden shifting) of the state (running conditions) of the vehicle, and thus it is possible to improve drivability and feeling. In addition, shifting can be achieved by improving just the automatic transmission control without having to provide a new manual shifting control by manipulating a shift switch or shift lever, so control can be simplified. Furthermore, with the operation of a shift switch or a shift lever, it is possible to hold shifting, and thus it is possible to improve operability and convenience.

BRIEF DESCRIPTION OF THE DRAWINGS

FIG. 1 is a block diagram schematically illustrating the construction of a vehicle that includes the gear-shift control apparatus for an automatic transmission of a first example of the present invention,
FIG. 2 is a time chart for explaining the change in the shift hold level that is calculated by the gear-shift control apparatus for an automatic transmission of a first example of the present invention,
FIG. 3 is a drawing of an image of shifting lines that are used in the gear-shift control apparatus for an automatic transmission of a first example of the present invention,
FIG. 4 is a flowchart that schematically illustrates the operation of the gear-shift control apparatus for an automatic transmission of a first example of the present invention,
FIG. 5 is a drawing for explaining shifting points that are calculated by the gear-shift control apparatus for an automatic transmission of a second example of the present invention,
FIG. 6 is a drawing for explaining correction of the accelerator opening degree by the gear-shift control apparatus for an automatic transmission of a third example of the present invention,
FIG. 7 is a time chart for explaining the change in the shift hold level that is calculated by the gear-shift control apparatus for an automatic transmission of a fourth example of the present invention,
FIG. 8 is a block diagram that schematically illustrates the construction of a vehicle that includes the gear-shift control apparatus for an automatic transmission of a fifth example of the present invention, and
FIG. 9 is a time chart for explaining the change in the shift hold level that is calculated by the gear-shift control apparatus for an automatic transmission of a fifth example of the present invention.

[MODES]

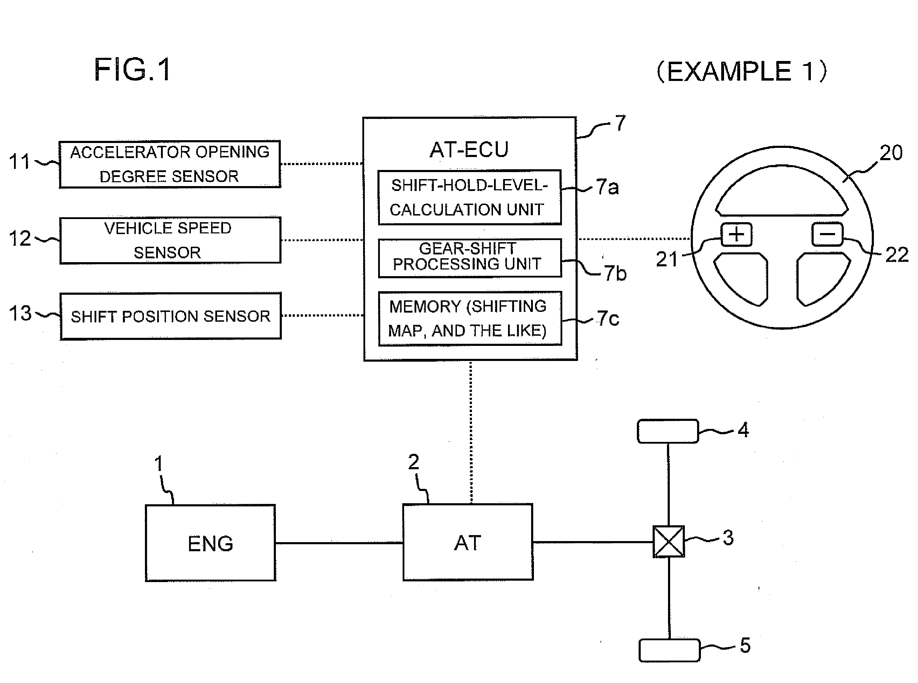

The shift control apparatus for an automatic transmission of a first exemplary embodiment of the present invention comprises: a shift-hold-level-calculation unit (7a in FIG. 1) that calculates the shift hold level that varies between 0%, which indicates a state of complete automatic shifting, and 100%, which indicates a state of complete manual shifting; and a gear-shift processing unit (7b in FIG. 1) that processes shift control of an automatic transmission (2 in FIG. 1) based on the shift hold level that was calculated by the shift-hold-level-calculation unit.

Assigning reference numbers in the drawings of this description is solely for the purpose of aiding in understanding the invention, and it is not intended to limit to the mode illustrated in the drawing.

Example 1

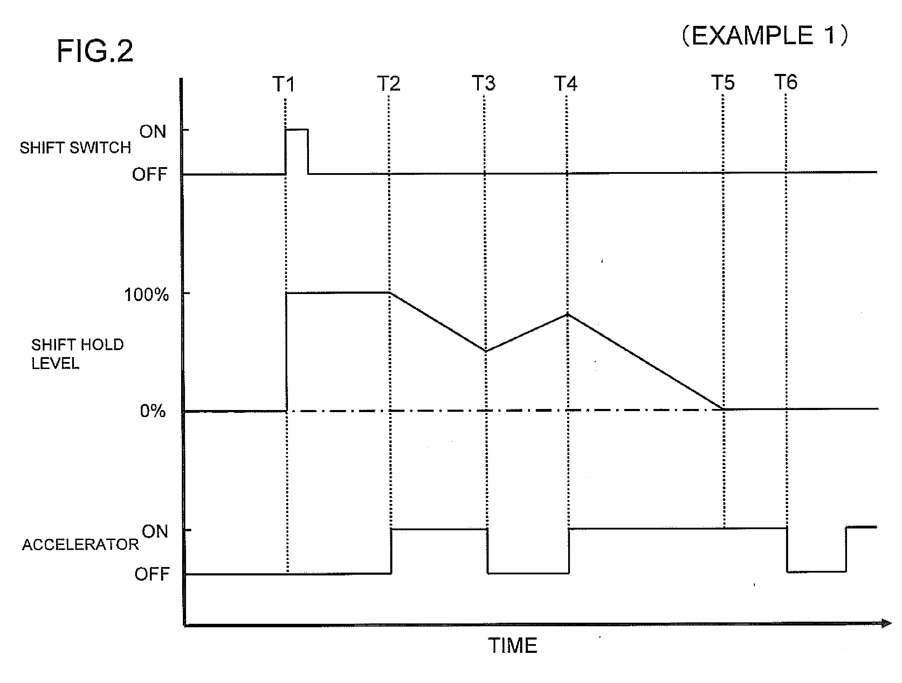

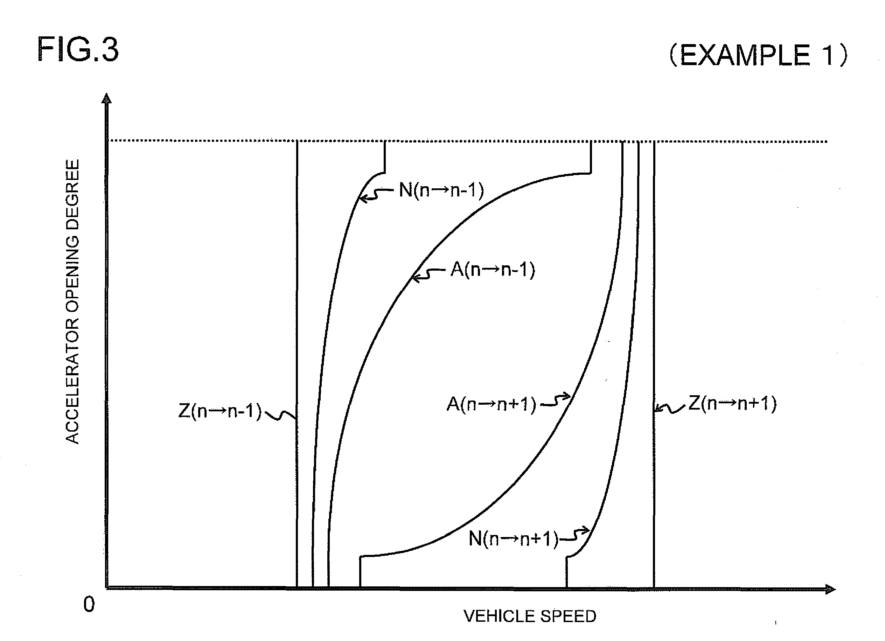

The shift control apparatus for an automatic transmission of a first example of the present invention is explained using the drawings. FIG. 1 is a block diagram that schematically illustrates the construction of a vehicle that includes the gear-shift control apparatus for an automatic transmission of this first example of the present invention. FIG. 2 is a time chart for explaining the change in the shift hold level that is calculated by the gear-shift control apparatus for an automatic transmission of this first example of the present invention. FIG. 3 is a drawing illustrating an image of shifting lines that are used by the gear-shift control apparatus for an automatic transmission of this first example of the present invention.

In referencing FIG. 1, the vehicle that includes the gear-shift control apparatus for an automatic transmission is provided with an automatic transmission 2 and differential gear 3 in the power transmission path between an engine and drive wheels 4, 5. The vehicle has an engine 1, an automatic transmission 2, a differential gear 3, drive wheels 4, 5, an electronic controller 7, and accelerator opening degree (position) sensor 11, vehicle speed sensor 12, a shift position sensor 13 and a steering wheel 20. In FIG. 1, a vehicle having only the engine 1 as a power source is illustrated, however, the invention could also be applied to a hybrid vehicle that has an engine and a motor as power sources, or an electric automobile that has only a motor as a power source.

The engine 1 is an internal combustion engine that explosively combusts fuel inside the cylinder and outputs torque by that thermal energy, and has an injector actuator (not illustrated in the figure) that adjusts the amount of fuel injection, and an igniter actuator (not illustrated in the figure) that adjusts the ignition timing for igniting the fuel. The torque of the engine 1 is transmitted to the automatic transmission 2 by way of a crankshaft. The engine 1 is connected to an engine controller (not illustrated in the figure) so that communication is possible, and is controlled by the engine controller.

The automatic transmission 2 is a mechanism that transmits the rotational power (torque) outputted from the engine 1 with changing in rotational speed (gear shifting), and is a mechanism that transmits that torque to the drive wheels 4, 5 by way of the differential gear 3. The automatic transmission 2, for example, is such that the torque that is outputted from the engine 1 is inputted to a planetary gear mechanism (a combination of a plurality of planetary gear mechanisms) by way of a torque converter (not illustrated in the figure), and that torque is changed in speed by the planetary gear mechanism and outputted to the differential gear 3. The automatic transmission 2 has a clutch that causes specified rotating elements of the planetary gear mechanism to engage such that they can be disconnected or connected, a brake(s) that stops the rotation of specified rotating elements, a hydraulic circuit that controls the hydraulics of the clutch and brake(s), and solenoids that switch the hydraulic path or adjust the hydraulic pressure in a hydraulic circuit. The automatic transmission 2 is connected with the electronic controller 7 so that communication is possible, and is controlled by the electronic controller 7.

The electronic controller 7 is (comprises) a computer that controls operation of the automatic transmission 2. The electronic controller 7 forms the gear-shift control apparatus. The electronic controller 7 is connected to various actuators (for example, solenoids not illustrated in the figure), various sensors 11 to 13, and switches 21, 22 of the automatic transmission 2 so that communication is possible. The electronic controller 7 performs control based on specified programs (including databases, maps and the like) according to signals from the sensors 11 to 13, switches 21, 22 etc. The shift-hold-level-calculation unit 7a, the gear-shift processing unit 7b, and a memory 7c are implemented by the electronic controller 7 executing programs.

The shift-hold-level-calculation unit 7a is a unit that has a function for calculating the shift hold level. The shift-hold-level-calculation unit 7a calculates the shift hold level based on the state (conditions) of the vehicle (for example, vehicle speed) or operation (manipulation) by a driver (for example, accelerator etc.) according to signals from the sensors 11 to 13 and switches 21, 22. The shift-hold-level-calculation unit 7a performs calculation so that the level decreases toward 0% in certain conditions (for example, a condition in which the vehicle speed, accelerator opening degree are both continuously constant) under which returning to the normal automatic transmission state is allowable (automatic-transmission mode), and performs calculation so that the level increases toward 100% in another conditions (for example, when accelerator is always changing such as when travelling over a winding road) in which shifting should be held (manual-transmission mode). When shifting of the automatic transmission 2 is performed by the gear-shift processing unit 7b according to the ON operation of the up-shift switch 21 or the down-shift switch 22 (this could also be an up-shift operation or down-shift operation by a shift lever), the shift-hold-level-calculation unit 7a forcibly sets the shift hold level to 100%. When operation of the up-shift switch 21 or down-shift switch 22 (this could also be an up-shift or down-shift operation by a shift lever) is not performed in case where the shift hold level is 0%, it can be considered that the driver does not intend to perform manual operation, so in order to maintain the automatic-transmission mode, the shift-hold-level-calculation unit 7a fixes the shift hold level as is at 0%. The shift hold level that is calculated by the shift-hold-level-calculation unit 7a is used when shifting is performed by the gear-shift processing unit 7b.

Here, the shift hold level denotes a level that increases or decreases (i.e., changes) between 0% to 100% according to the state of the vehicle or an operation by the driver, and assumes 100% when shifting (a gear) is completely held (manual transmission state), and assumes 0% in the normal automatic transmission state. The shift hold level is not an index for selectively switching-over between the manual-transmission mode and the automatic-transmission mode, but is for referencing the degree of the manual-transmission mode and the degree of the automatic-transmission mode.

An example of the calculation process for calculating the shift hold level is shown.

In a state of [1] stepping on the accelerator pedal (state of the actual accelerator opening degree is a preset threshold value or greater; accelerator ON state), when the shift hold level is greater than 0%, the shift-hold-level-calculation unit uses the equation below [Equation 1] to perform calculation so that the shift hold level changes in a direction toward 0% (normal automatic transmission) (between T2-T3, and between T4-T5 in FIG. 2). Here, $L_1$ is the current shift hold level, $L_0$ is the previous shift hold level, and $K_1$ is an arbitrary positive constant (%/sec). When a state of stepping on an accelerator pedal continues, it is considered that the driver desires automatic shifting, so the current shift hold level $L_1$ is changed toward the side of a shift hold level of 0% (normal automatic transmission). When the current shift hold level $L_1$ is calculated from [Equation 1] to be 0% or less, the level is set to be 0% (T5 and later in FIG. 2).

$$[\text{Equation 1}]$$
$$L_1 = L_0 - K_1$$

\* $L_1$: Current shift level
$L_0$: Previous shift level
$K_1$: Arbitrary positive constant [%/sec]

In a state of [2] returning the accelerator pedal (state wherein the actual accelerator opening degree is less than a preset threshold value; accelerator OFF state) when the shift hold level is greater than 0% and less than 100%, the shift-hold-level-calculation unit 7a uses the equation below [Equation 2] to perform calculation so that the shift hold level is changed toward 100% (shift hold) (between T3-T4 in FIG. 2). Here, $L_1$ is the current shift hold level, $L_0$ is the previous shift hold level, and $K_2$ is an arbitrary positive constant [%/sec]. When the state of returning the accelerator pedal continues, it is considered that the driver desires manual gear-shifting, so the current shift hold level $L_1$ is changed toward the side of a shift hold level of 100% (shift hold). When the current shift hold level $L_1$ is calculated using [Equation 2] to be 100% or greater, the level is set to be 100% (between T1-T2 in FIG. 2). When the shift hold level is 0% even in a state of returning the accelerator pedal, the shift hold level will not be updated as long as there is no operation of the up-shift switch 21 or down-shift switch 22, so the shift hold level is fixed at 0% (before T1 and after T6 in FIG. 2).

$$[\text{Equation 2}]$$
$$L_1 = L_0 + K_2$$

\* $L_1$: Current shift level
$L_0$: Previous shift level
$K_2$: Arbitrary positive constant [%/sec]

The gear-shift processing unit 7b is a unit that has a function for performing the shift control process of the automatic transmission. The gear-shift processing unit 7b performs control so that when the up-shift switch 21 is set to ON (an up-shift operation by the shift lever is also possible), the shift gear of the automatic transmission moves up by one gear (speed). When the shift lever is operated, the gear-shift processing unit 7b performs gear-shift control based on a signal from the shift position sensor 13. The gear-shift processing unit 7b performs control such that when the down-shift switch 22 is set to ON (a down-shift operation by the shift lever is also possible), the shift gear of the automatic transmission moves down by one gear. The gear-shift processing unit 7b performs shifting line processing when the up-shift switch 21 or the down-shift switch 22 is set ON. When the up-switch 21 or the down-switch 22 are not operated, the gear-shift processing unit 7b acquires a real-time shift hold level that was calculated by the shift-hold-level-calculation unit 7a, and when the level is greater than 0%, performs shifting line processing by updating the acquired shift hold level. In this shifting line processing, the gear-shift processing unit 7b, based on the acquired shift hold level, selects a corresponding shifting line from a shifting map (see FIG. 3) that is stored in memory 7c, and based on the selected shifting line, performs the gear-shift control process of the automatic transmission control according to the accelerator opening degree and the vehicle speed.

As examples of selecting a corresponding shifting line according to the shift hold level, [1] when the shift hold level is 0 to 19%, the gear-shift processing unit 7b selects shifting line A (shifting line for automatic transmission; A (n → n + 1), A (n → n - 1)) in the shifting map, [2] when the shift hold level is 20 to 69%, selects shifting line N (in between shifting line A and shifting line Z; N (n → n + 1), N (n → n - 1)) in the shifting map, and [3] when the shift hold level is 70 to 100% (FIG. 3; n is the shift gear), selects shifting line Z (shifting line for shift hold; Z (n → n + 1), Z (n → n - 1)). The shifting line for shift hold Z (n → n + 1), Z (n → n - 1) is a shifting line where shifting (shift up, shift down) is performed at a specified vehicle speed regardless of the accelerator opening degree. Moreover, the shifting line for automatic transmission A (n → n + 1) is a shifting line where shifting up is performed at a high vehicle speed as the accelerator opening degree increases, and shifting line A (n → n - 1) is a shifting line where shifting down is performed at a high vehicle speed as the accelerator opening degree increases. Furthermore, on the shifting up side, the vehicle speed where shifting is performed becomes higher in the order of the shifting line A (n → n + 1), shifting line N (n → n + 1) and shifting line Z (n → n + 1), and the vehicle speed where shifting is performed becomes low in the order of the shifting line A (n → n - 1), shifting line N (n → n - 1) and shifting line Z (n → n - 1). Fig. 3 illustrates an example where three shifting lines (total of six shifting lines for shifting up and shifting down) are used, however, as long as there are at lease two or more shifting lines (total of four or more shifting lines for shifting up and shifting down), any number is possible.

As examples of processing shifting control of the automatic transmission based on selected the shifting lines according to the accelerator opening degree and vehicle speed, the gear-shift processing unit 7b, for example, provided that the shifting line N (N (n → n + 1), N (n → n - 1) is selected performs gear-shift processing of shifting up, [1] when the actual vehicle speed (vehicle speed detected by the vehicle speed sensor 12) at the actual accelerator opening degree (accelerator opening degree that is detected by the accelerator opening degree sensor 11) is equal to or greater than the vehicle speed that corresponds to the actual accelerator opening degree of the shifting line N (n → n + 1) on the selected shifting up side, performs gear-shift processing of shifting down, [2] when the actual vehicle speed is equal to or less than the vehicle speed that corresponds to the actual accelerator opening degree of the shifting line N (n → n - 1) on the selected shifting down side, and [3] when the vehicle speed is [3] between shifting lines (for example between N (n → n + 1) and N (n → n - 1)), maintains the current shifting gear. The same applies for shifting line A and shifting line Z.

The memory 7c is a unit that functions to store specified information such as shifting maps, programs and the like. The memory 7c provides information to the gear-shift processing unit 7b that corresponds to requests from the gear-shift processing unit 7b.

The accelerator opening degree sensor 11 is a sensor that detects the accelerator opening degree that corresponds to the amount that the accelerator pedal (not illustrated in the figure; can also be an accelerator lever) has been operated. The vehicle speed sensor 12 is a sensor that detects the speed of the vehicle. The shift position sensor 13 is a sensor that detects the amount that the shift lever has been operated (such as parking P, neutral N, drive D, shift-up +, shift-down -). The sensors 11, 12, 13 are connected to the electronic controller 7 so that communication is possible.

The steering wheel 20 is a steering apparatus for arbitrarily changing the traveling direction of the vehicle, and is a steering wheel in FIG. 1. An up-shift switch 21 and down-shift switch 22 for performing manual shifting are attached to the steering wheel 20. The up-shift switch 21 is a switch (also called a " + paddle") for manually shifting up the shift gear of the automatic transmission 2. The down-shift switch 22 is a switch (also called a "- paddle") for manually shifting down the shift gear of the automatic transmission 2. Both of the switches 21, 22 are connected to the electronic controller 7 so that communication is possible.

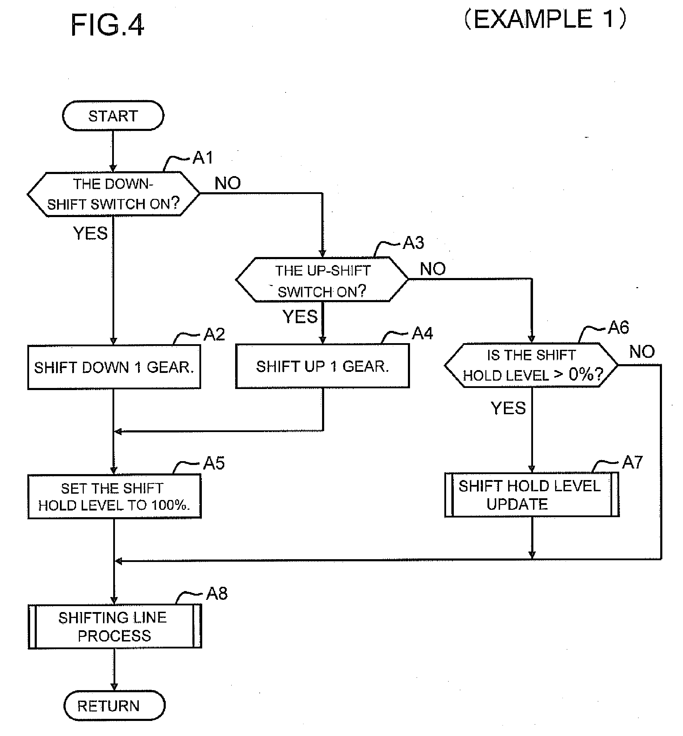

Next, the operation of the shift control apparatus for an automatic transmission of a first example of the present invention will be explained using the drawings. FIG. 4 is a flowchart schematically illustrating the operation of the gear-shift control apparatus for an automatic transmission of a first example of the present invention. Construction of a vehicle that includes a shift control apparatus for an automatic transmission is illustrated in FIG. 1.

First, the electronic controller 7 determines whether or not the down-shift switch 22 has been switched ON (step A1). When the down-shift switch 22 is not ON (step A1: NO), processing advances to step A3.

When the down-shift switch 22 has been switched ON (step S1: YES), the electronic controller 7 performs control so as to lower (shift-down) the shifting gear (transmission gear) of the automatic transmission 2 by one gear (shift speed) (step A2). After step A2, processing advances to step A5.

When the down-shift switch 22 is not ON (step A1: NO), the electronic controller 7 determines whether or not the up-shift switch 21 has been switched ON (step A3). When the up-shift switch 21 is not ON (step A3: NO), processing advances to step A6.

When the up-shift switch 21 has been switched ON (step A3: YES), the electronic controller 7 performs control so as to raise the shift gear (transmission gear) of the automatic transmission 2 by one gear (step A4). After step A4, processing advances to step A5.

After step A2 or step A4, the electronic controller 7 forcibly sets the shift hold level in the shift-hold-level-calculation unit 7a to 100% (step A5). Step A5 corresponds to the point in time T1 in FIG. 2. After step A5, processing advances to step A8.

When the up-shift switch 21 is not ON (step A3: NO), the electronic controller 7 determines whether or not the shift hold level in the shift-hold-level-calculation unit is greater than 0% (step A6). When the shift hold level in the shift-hold-level-calculation unit 7a is 0% or less (step A6: NO), the shift hold level is 0%, so processing advances to step A8 without updating the shift hold level. NO in step A6 corresponds to points in time before T1 and after T5 in FIG. 2.

When the shift hold level in the shift-hold-level-calculation unit 7a is greater than 0% (step A6: YES), the electronic controller 7 updates (continuously or intermittently update-processing) the value of the shift hold level in the shift-hold-level-calculation unit 7a (step A7). After step A7, processing advances to step A8. Step A7 corresponds to a point in time between T1 to T5 in FIG. 2.

After step A5, after step A7 or in the case of NO in step A6, the electronic controller 7 causes the gear-shift processing unit 7b to select a shifting line (for example, see FIG. 3) according to most recent shift hold level in the shift-hold-level-calculation unit 7a (100% in the case of being after step A5, the most recent value after update in the case of being after step A7, and 0% in the case of NO in step A6), then, based on the selected shifting line, performs the gear-shift control process (control process for shifting down, shifting up or maintaining the shifting gear) of the automatic transmission 2 according to actual accelerator opening degree (value detected by the accelerator opening degree sensor 11) and the actual vehicle speed (value detected by the vehicle speed sensor 12) (step A8). After step A8, processing returns to the start.

With this first example, the transmission mode is switched automatically according to a shift hold level that is automatically calculated and set, so there is no need for troublesome operation upon changing the mode, and thus it is possible to improve the ease of operation and fuel efficiency. Moreover, switching of the transmission mode is performed in multi stages according to a shift hold level that is automatically calculated and set, so it is possible to improve drivability and feeling without sudden change in the state of the vehicle (sudden change in the shift gear). In addition, shifting is possible by simply changing the automatic-transmission control using operation of an up-shift switch 21 and down-shift switch 22, without the need for new manual-transmission control, so it is possible to simplify control. Furthermore, through operation of the up-shift switch 21 and down-shift switch 22, it is possible to hold shifting, so it is possible to improve ease of operation and convenience.

Example 2

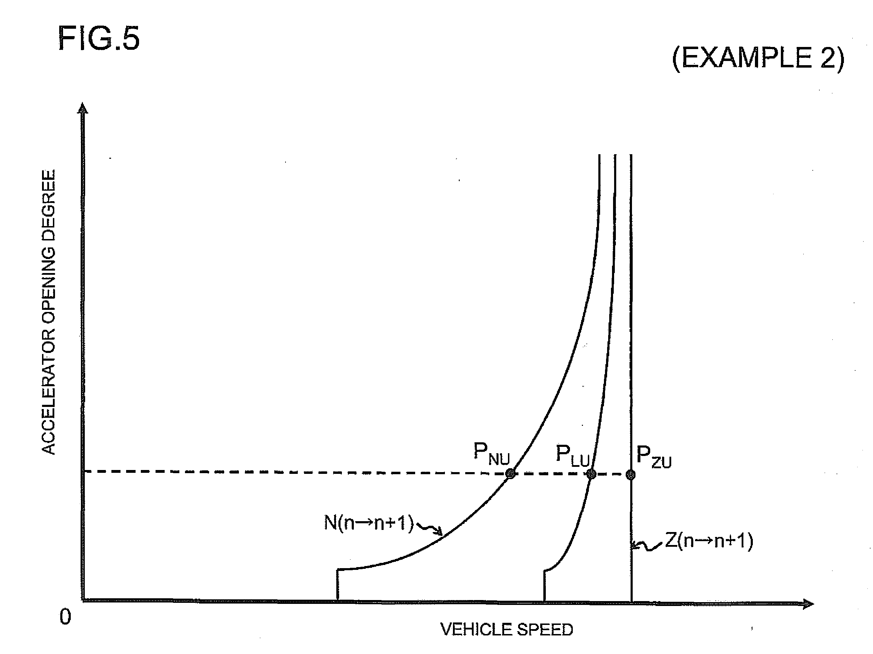

A gear-shift control apparatus for an automatic transmission of a second example of the present invention will be explained using the drawings. FIG. 5 is a drawing for explaining shifting points that are calculated by the gear-shift control apparatus for an automatic transmission of this second example of the present invention.

The second example is such that the gear-shift processing unit (corresponds to 7b in FIG. 1) of the electronic controller (7 in FIG. 1) selects a preset shifting line (see FIG. 3) according to the shift hold level as in the first example, then calculates the shifting point(s) based on a shifting line(s) in a preset shifting map according to the shift hold level and accelerator opening degree, and performs gear-shift control processing based on the calculated shifting point according to the vehicle speed. The other construction is the same as in the first example.

As an example of calculating a shifting point according to the shift hold level, when, as illustrated in FIG. 3, [1] shifting lines A (shifting lines for automatic transmission; A (n → n + 1), A (n → n - 1) when the shift hold level is 0%, [2] shifting lines N (between the shifting line A and shifting line Z; N (n → n + 1), A (n → n - 1)) when the shift hold level is 40%, and [3] shifting lines Z (shifting lines for shift hold; Z (n → n + 1), Z (n → n - 1)) when the shift hold level is 100%, are stored in memory (corresponds to 7c in FIG. 1), the gear-shift processing unit (corresponds to 7b in FIG. 1) calculates the shifting point(s) as described below.

When the shift hold level is 0%, a shifting point PAD on the shift-down side and a shifting point $P_{AU}$ on the shift-up side are found on the shifting line A (A (n → n + 1), A (n → n - 1)) that corresponds to the actual accelerator opening degree (value detected by the accelerator opening degree sensor 11 in FIG. 1).

When the shift hold level is greater than 0% and less than 40%, based on the shifting line A (A (n → n + 1), A (n → n - 1)) and shifting lines N (N (n → n + 1), N (n → n - 1)), a shifting point $P_{AU}$ on the shift-up side and a shifting point PAD on the shift-down side are found on the shifting lines A (A (n → n + 1), A (n → n - 1)) that corresponds to the actual accelerator opening degree (value detected by the accelerator opening degree sensor 11 in FIG. 1), and a shifting point $P_{NU}$ on the shift-up side and a shifting point $P_{ND}$ on the shift-down side are found on the shifting line N (N (n → n + 1), N (n → n - 1)) that corresponds to the actual accelerator opening degree, and by calculating each shifting point and shift hold level value using the [Equation 3] below, the shifting point $P_{LU}$ on the shift-up side and the shifting point $P_{LD}$ on the shift-down side that correspond to the shift hold level L and actual accelerator opening degree are found.

$$[\text{Equation 3}]$$
$$P_{LU} = \{(40 - L) \times P_{AU} + (L - 0) \times P_{NU}\}/40$$
$$P_{LD} = \{(40 - L) \times P_{AD} + (L - 0) \times P_{ND}\}/40$$

Where:

PLU: Shifting point on the shift-up side to be calculated
PLD: Shifting point on the shift-down side to be calculated
L: Shift hold level
$P_{AU}$: Shifting point on the shift-up side on shifting line A
PAD: Shifting point on the shift-down side on shifting line A
$P_{NU}$: Shifting point on the shift-up side on shifting line N
$P_{ND}$: Shifting point on the shift-down side on shifting line N

When the shift hold level is 40%, a shifting point $P_{ND}$ on the shift-down side and a shifting point $P_{NU}$ on the shift-up side are found on the shifting line N (N (n → n + 1), N (n → n - 1)) that corresponds to the actual accelerator opening degree (value detected by the accelerator opening degree sensor in FIG. 1).

When the shift hold level is greater than 40% and less than 100%, based on the shifting lines N (N (n → n + 1), N(n → n - 1)) and shifting lines Z (Z (n → n + 1), Z (n → n - 1)), a shifting point $P_{NU}$ on the shift-up side and a shifting point $P_{ND}$ on the shift-down side are found on the shifting lines N (N (n → n + 1), N (n → n - 1)) that correspond to the actual accelerator opening degree, and a shifting point Pzu on the shift-up side and a shifting point $P_{ZD}$ on the shift-down side are found on the shifting lines Z (Z (n → n + 1), Z (n → n - 1)) that correspond to the actual accelerator opening degree (value detected b the accelerator opening degree sensor in FIG. 1), and by calculating each shifting point and shift hold level value using the [Equation 4] below, the shifting point $P_{LU}$ on the shift-up side and the shifting point $P_{LD}$ on the shift-down side that correspond to the shift hold level L and actual accelerator opening degree are found.

$$[\text{Equation 4}]$$
$$P_{LU} = \{(100 - L) \times P_{NU} + (L - 40) \times P_{ZU}\}/(100 - 40)$$
$$P_{LD} = \{(100 - L) \times P_{ND} + (L - 40) \times P_{ZD}\}/(100 - 40)$$

Where:

$P_{LU}$: Shifting point on the shift-up side to be calculated
$P_{LD}$: Shifting point on the shift-down side to be calculated
L: Shift hold level
$P_{NU}$: Shifting point on the shift-up side on shifting line N
$P_{ND}$: Shifting point on the shift-down side on shifting line N
$P_{ZU}$: Shifting point on the shift-up side on shifting line Z
$P_{ZD}$: Shifting point on the shift-down side on shifting line Z

For example, when the shift hold level L = 70%, a shifting point $P_{LU}$ on the shift-up side that corresponds to the shift hold level L and actual accelerator opening degree is found using [Equation 5] below (see FIG. 5).

[Equation 5]

$$P_{LU} = \{(100 - 70) \times P_{NU} + (70 - 40) \times P_{ZU}\}/(100 - 40)$$

When the shift hold level is 100%, a shifting point $P_{ZD}$ on the shift-down side and a shifting point Pzu on the shift-up side on a shifting line Z (Z (n → n + 1), Z (n → n - 1)) that corresponds to the actual accelerator opening degree (value detected by the accelerator opening degree sensor in FIG. 1) are found.

Here, an example was given of using three shifting lines (total of six shifting lines for shifting up and shifting down), however, as long at there are two or more shifting lines (total of four or more for shifting up and shifting down) any number could be used.

As an example of a shift control process based on the calculated shifting point, the gear-shift processing unit (7b in FIG. 1), after finding a shifting point $P_{LU}$ on the shift-up side and a shifting point $P_{LD}$ on the shift-down side, for example, performs a shifting processing of shifting up [1] when the actual vehicle speed (vehicle speed detected by the vehicle speed sensor 12) is equal to or greater than the vehicle speed that corresponds to the shifting point $P_{LU}$ on the shift-up side, performs a shifting process of shifting down [2] when the vehicle speed is equal to or less than the vehicle speed that corresponds to the shifting point $P_{LD}$ on the shift-down side, and maintains the current shift gear [3] when the vehicle speed is between the shifting points $P_{LU}$ and $P_{LD}$.

With this second example, as in the first example switching the transmission mode is performed automatically according to a shift hold level that is automatically calculated and set, so there is no need for troublesome operation when changing modes, and thus it is possible to improve the ease of operation and fuel efficiency. Moreover, switching of the transmission mode is performed continuously according to a shift hold level that is automatically calculated and set, so there is no sudden change in the vehicle state (sudden gear shift), and it is possible to improve drivability and feeling even more than in the first example. In addition, as in the first example, with the up-shift switch (corresponds to 21 in FIG. 1) and the down-shift switch (corresponds to 22 in FIG. 1) it is possible to shift by just improving the automatic transmission control without having to install new manual transmission control, so it is possible to simplify control. Furthermore, as in the first example, by operating the up-shift switch (corresponds to 21 in FIG. 1) and the down-shift switch (corresponds to 22 in FIG. 1), it is possible to hold shifting, so it is possible to improve the ease of operation and convenience.

Example 3

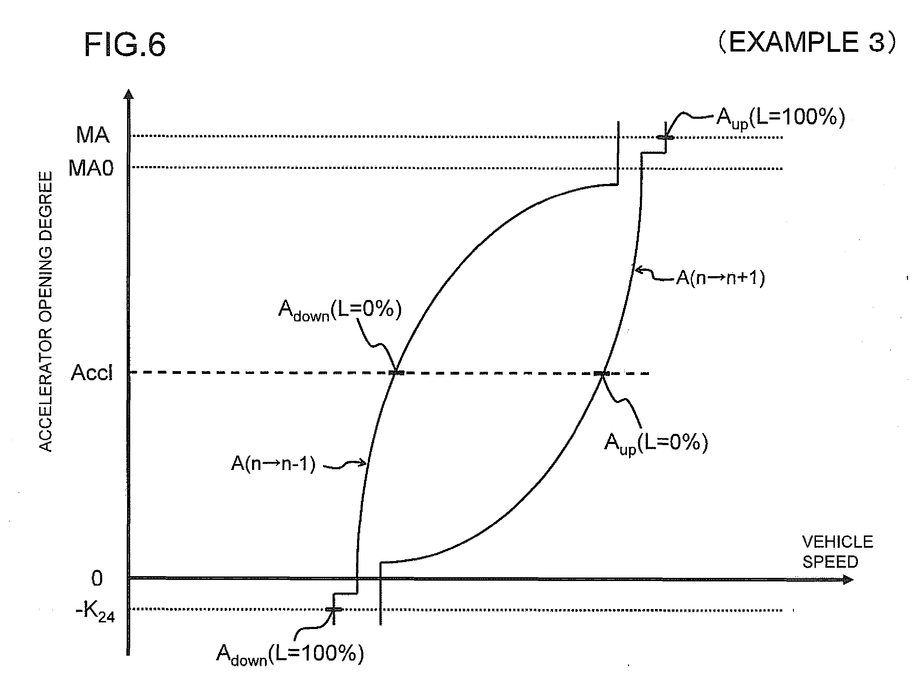

The gear-shift control apparatus for an automatic transmission of a third example of the present invention will be explained using the drawings. FIG. 6 is a drawing for explaining correction of the accelerator opening degree of the gear-shift control apparatus for an automatic transmission of this third example of the present invention.

In example 3, the gear-shift processing unit (corresponds to 7b in FIG. 1) of the electric controller (corresponds to 7 in FIG. 1) does not perform gear-shift control processing using the value (actual accelerator opening degree) detected by the accelerator opening degree sensor (11 in FIG. 1) as in examples 1 and 2 as is, but corrects the actual accelerator opening degree Accl (value detected by the accelerator opening degree sensor) based on the shift hold level L, then performs shift control processing based on a preset shifting line A (A (n → n + 1), A (n → n - 1); shifting lines for automatic transmission with part of the shifting line improved) according to the corrected accelerator opening degree $A_{up}$, $A_{down}$. The other operation and construction is the same as in the first example.

Here, for the corrected accelerator opening degree there is a corrected accelerator opening degree $A_{up}$ that is used for a shifting line A (n → 0 n + 1) on the shift-up side, and a corrected accelerator opening degree $A_{down}$ that is used for a shifting line A (n → n - 1) on the shift-down side, and is calculated (corrected) based on the actual accelerator opening degree Accl according to the shift hold level L.

The corrected accelerator opening degree $A_{up}$ on the shift-up side is corrected to a value that is equal to or greater than the actual accelerator opening degree Accl according to the shift hold value. The corrected accelerator opening degree $A_{up}$ (L = 0%) when the shift hold value L = 0% is made to coincide with the actual accelerator opening degree Accl, and as the shift hold level L increases, the corrected accelerator opening degree $A_{UP}$ becomes greater, and the corrected accelerator opening degree $A_{up}$ (L = 100%) becomes a maximum when the shift hold level L = 100% (see FIG. 6). For example, the corrected accelerator opening degree $A_{up}$ has a relationship such as "$A_{up}$ (L =100%) > $A_{up}$ (L = 50%) > $A_{up}$ (L = 10%) > Accl". The reason that the corrected accelerator opening degree $A_{up}$ is corrected to a larger value as the shift hold level L increases is that as the shift hold level L increases, in order to make it difficult to shift up (make it easier to perform a shift hold), the vehicle speed that corresponds to the shifting point is increased. The corrected accelerator opening degree $A_{up}$, for example, can be calculated using [Equation 6] below. When $A_{up}$ becomes equal to or greater than MA according to [Equation 6], $A_{up}$ is set so that $A_{up}$ = MA.

[Equation 6]

$$A_{up} = MA - K_{21} \times (100\% - K_{22} \times L) \times (MA - Accl) + K_{23} \times L$$

where:

MA: Maximum value of $A_{up}$ (= MAO + $K_{24}$)
MAO: Maximum value of the accelerator opening degree
$K_{21}$, $K_{22}$, $K_{23}$, $K_{24}$: Arbitrary positive constants

The corrected accelerator opening degree $A_{down}$ is corrected according to the shift hold level to a value equal to or less than the actual accelerator opening degree Accl. The corrected accelerator opening degree $A_{down}$ (L = 0%) when the shift hold level L = 0% is made to coincide with the actual accelerator opening degree Accl, and as the shift hold level L becomes larger, the corrected accelerator opening degree $A_{down}$ becomes smaller, and when the shift hold level L = 100%, the correction accelerator opening degree $A_{down}$ (L = 100%) becomes a minimum (see FIG. 6). For example, $A_{down}$ is in a relationship such as "$A_{down}$ (L = 100%) < $A_{down}$ (L = 50%) < $A_{down}$ (L = 10%) < Accl". The reason that the corrected accelerator opening degree $A_{down}$ is corrected so as to become smaller as the shift hold level L become greater is because, as the shift hold level L becomes greater, the vehicle speed corresponding to the shifting point in order to make it difficult to shift down (make it is to perform a shift hold) becomes low. The corrected accelerator opening degree $A_{down}$ can be calculated using [Equation 7] below. When $A_{down}$ becomes equal to or less than -$K_{14}$, $A_{down}$ is set to $A_{down}$ = -$K_{14}$. $K_{14}$ is an arbitrary positive constant.

[Equation 7]

$$A_{down} = K_{11} \times (100\% - K_{12} \times L) \times Accl - K_{13} \times L$$

Where:

$A_{down}$: Corrected accelerator opening degree on the shift-down side
$K_{11}$, $K_{12}$, $K_{13}$: Arbitrary positive constants
L: Shift hold level
Accl: Actual accelerator opening degree

The shifting line A (A (n → n + 1), A (n → n - 1)) is based on a shifting line for automatic transmission where the accelerator opening degree is between 0 and MAO (maximum value of the accelerator opening degree), where the shifting line A (n → n + 1) on the shift-up side is a shifting line for shift hold on the shift-up side for an accelerator opening degree between MAO to MA, and shifting line A (n → n - 1) on the shift-down side is a shifting line for shift hold on the shift-down side for an accelerator opening degree between 0 to -$K_{14}$ (see FIG. 6).

As an example of gear-shift control processing based on the corrected accelerator opening degree $A_{up}$, $A_{down}$, the gear-shift processing unit (7b in FIG. 1), after the corrected accelerator opening degrees $A_{up}$, $A_{down}$ having been found, for example, based on the preset shifting lines A (A (n → n + 1), A (n → n - 1); the shifting line for automatic transmission of which part of the shifting line has been corrected), [1] performs a shifting process to shift up when the actual vehicle speed (vehicle speed detected by the vehicle speed sensor 12) is equal to or greater than the vehicle speed corresponding to correction accelerator opening degree $A_{up}$ on the shift-up side, [2] performs a shifting process to shift down when the actual vehicle speed is equal to or less than the vehicle speed corresponding to the corrected accelerator opening degree $A_{down}$ on the shift-down side, and [3] maintains the current shift gear when the actual vehicle speed is between the vehicle speed corresponding to the corrected accelerator opening degree $A_{up}$ and the vehicle speed corresponding to the corrected accelerator opening degree $A_{down}$.

With this third example, operation is performed to switch the transmission mode according to a corrected accelerator opening degree obtained by correcting the actual accelerator opening degree according to an automatically set shift hold level, so there is no need for troublesome operation in order to change the mode, and it is possible to improve ease of operation and fuel efficiency. Moreover, the actual accelerator opening degree is corrected so that it is difficult for shifting to occur as the shift hold level increases (becomes easy to perform a shift hold), so there is no sudden change in the vehicle state (sudden gear shift), and it is possible to improve drivability and feeling. In addition, as in the first example, with the up-shift switch (corresponds to 21 in FIG. 1) and the down-shift switch (corresponds to 22 in FIG. 1) it is possible to shift by just improving the automatic transmission control without having to install new manual transmission control, so it is possible to simplify control. Furthermore, as in the first example, by operating the up-shift switch (corresponds to 21 in FIG. 1) and the down-shift switch (corresponds to 22 in FIG. 1), it is possible to hold shifting, so it is possible to improve the ease of operation and convenience.

Example 4

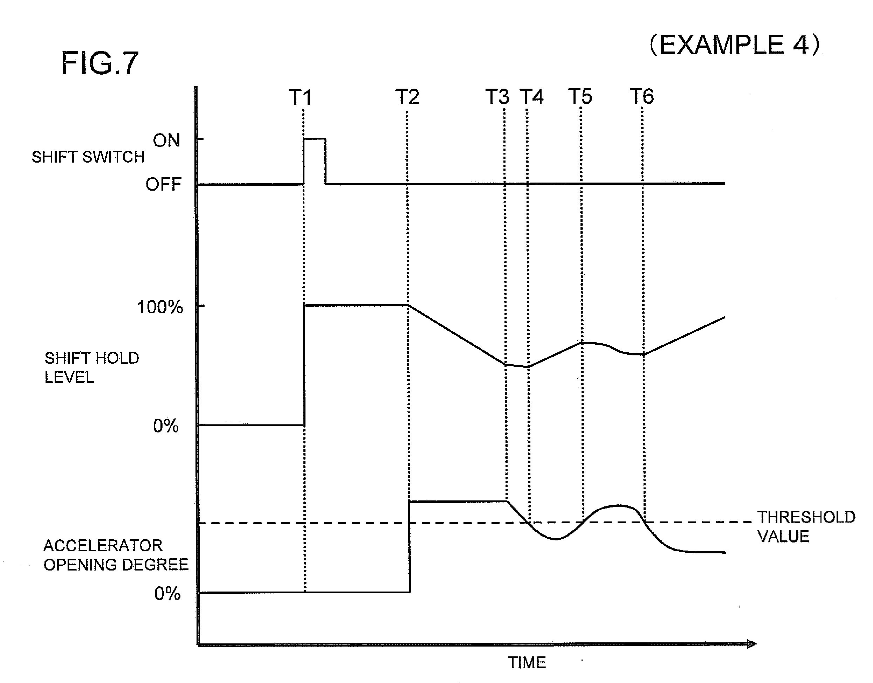

The gear-shift control apparatus for an automatic transmission of a fourth example of the present invention will be explained using the drawings. FIG. 7 is a time chart for explaining the change in the shift hold level that is calculated by the gear-shift control apparatus for an automatic transmission of this fourth example of the present invention.
The fourth example is a variation of a calculation process for calculating the shift hold level by the shift-hold-level-calculation unit (7a in FIG. 1) in the gear-shift control apparatus for an automatic transmission of the first example. In the fourth example, when there is change in the amount that the accelerator pedal is pressed (when pressed or released) the shift hold level is corrected in the direction toward the 100% (sift hold) side. The operation and construction other than the shift hold calculation process is the same as in the first example. Moreover, the fourth example can also be applied to the second and third examples.
As in the first example, the shift-hold-level-calculation unit (corresponds to 7a in FIG. 1) performs calculation in a state where it is okay to return to the normal automatic transmission state (automatic-transmission mode) so that the shift hold level is decreased toward 0%; however, in a state where shifting should be held (manual-transmission mode), performs calculation so that the shift hold level increases toward 100%. Furthermore, as in the first example, when the gear-shift processing unit (corresponds to 7b in FIG. 1) performs shifting of the automatic transmission (corresponds to 2 in FIG. 1) according to the ON operation by the up-shift switch (corresponds to 21 in FIG. 1) or the down-shift switch (corresponds to 22 in FIG. 1) (this is also possible by an up-shift or down-shift operation using the shift lever), the shift-hold-level-calculation unit (corresponds to 7a in FIG. 1) forcibly sets the shift hold level to 100%. As in the first example, when the shift hold level is 0% and operation by the up-shift switch (corresponds to 21 in FIG. 1) or the down-shift switch (corresponds to 22 in FIG. 1) (this is also possible by an up-shift or down-shift operation using the shift lever), the shift-hold-level-calculation unit (corresponds to 7a in FIG. 1), it can be said that the operation has no intention of performing manual operation, so in order to maintain the automatic-transmission mode, the shift hold level is kept as is at 0%. The shift hold level that is calculated by the shift-hold-calculation unit (corresponds to 7a in FIG. 1) is used when the gear-shift processing unit (corresponds to 7b in FIG. 1) performs a shifting process.
An example of the calculation process for calculating the shift hold level will be given.
When the shift hold level is greater than 0% and less than 100% in a state where [1] the actual accelerator opening degree is equal to or greater than a preset threshold value (accelerator ON state), the shift-hold-level-calculation unit (corresponds to 7a in FIG. 1) uses [Equation 8] below to perform calculation according the absolute value $|\Delta Acc1|$ of the amount of change in the amount that the accelerator pedal is pressed (actual accelerator opening degree) so that the shift hold level changes. Here, $L_1$ is the current shift hold level, $L_0$ is the previous shift hold level, $K_{11}$ and $K_{12}$ [%/sec] are arbitrary positive constants, and $|\Delta Accl|$ is the absolute value of the amount of change in the amount that the accelerator pedal is pressed (actual accelerator opening degree). When $K_{11} > K_{12} |\Delta Accl|$, the current shift hold level $L_1$ changes in the direction toward the shift hold level 0% side (normal automatic-transmission) (between T2 to T3, between T3 to T4 and between T5 to T6 in FIG. 7), when $K_{11} < K_{12} |\Delta Accl|$, the current shift hold level $L_1$ changes in the direction toward the shift hold level 100% side (shift hold), and when $K_{11} = K_{12} |\Delta Accl|$, the current shift hold level $L_1$ is the same as the previous shift hold level $L_0$. When the amount that the accelerator pedal is pressed is always changing, such as when the automobile is travelling over a winding road, there is a possibility that the driver desires to perform manual shifting, so the absolute value $|\Delta Accl|$ of the amount of change in the amount that the accelerator pedal is pressed (actual accelerator opening degree) is such that current shift hold level $L_1$ is changed toward shift hold level 100% (shift hold) side. As in the first example, when the amount that the accelerator pedal is pressed is in a fixed state ($|\Delta Accl| = 0$), the current shift hold level $L_1$ changes toward the shift hold level 0% (normal automatic transmission) side (between T2 to T3 in FIG. 7). When, according to [Equation 8], the current shift hold level $L_1$ is equal to or less than 0%, the $L_1$ is taken to be 0%.
$$[\text{Equation 8}]$$

$$L_1 = L_0 - K_{11} + K_{12} \,|\, \Delta Acc1 \,|$$

Where:

L$_1$: Current shift hold level
L0: Previous shift hold level
K11, K12: Arbitrary positive constants [%/sec]
|ΔAcc1|: Absolute value of the amount of change of the actual accelerator opening degree

When the shift hold level is greater than 0% and less than 100% in a state where [2] the actual accelerator opening degree is less than preset threshold value (includes a state where the accelerator is OFF, and a state when the accelerator pedal is released), the shift-hold-level-calculation unit (corresponds to 7a in FIG. 1) uses [Equation 9] below to perform calculation so that the shift hold level changes in a direction toward the 100% (shift hold) side (T4 to T5, and T6 and later in FIG. 7). Here, $L_1$ is the current shift hold level, $L_0$ is the previous shift hold level, and $K_{21}$ [%/sec] is an arbitrary positive constant. When the accelerator is OFF, it is thought that the driver desires to perform manual shifting, so the current shift hold level $L_1$ is changed to the shift hold level 100% (shift hold) side. When according to [Equation 9] the current shift hold level $L_1$ is 100% or greater, it is taken to be 100% (T1 to T2 in FIG. 7). Moreover, when the shift hold level is 0% even when the accelerator is OFF, the shift hold level will not be updated unless the up-shift switch (corresponds to 21 in FIG. 1) or the down-shift switch (corresponds to 22 in FIG. 1) is operated, so the shift hold level is fixed at 0% (T1 and before in FIG. 7).

$$[\text{Equation 9}]$$
$$L_1 = L_0 + K_{21}$$

Where:

L$_1$: Current shift hold level
L$_0$: Previous shift hold level
K$_{21}$: Arbitrary positive constant [%/sec]

The shift hold level that is calculated as described above is changed or updated according to the flowchart in FIG. 4, and is used by the gear-shift processing unit (7b in FIG. 1) when processing shifting control.

With this fourth example, together with obtaining an effect similar to the first example, by calculating the shift hold level according to the absolute value of the change in the amount that the accelerator pedal is pressed when the accelerator is ON, it is possible to achieve shifting that reflects the potential intention of the driver.

Example 5

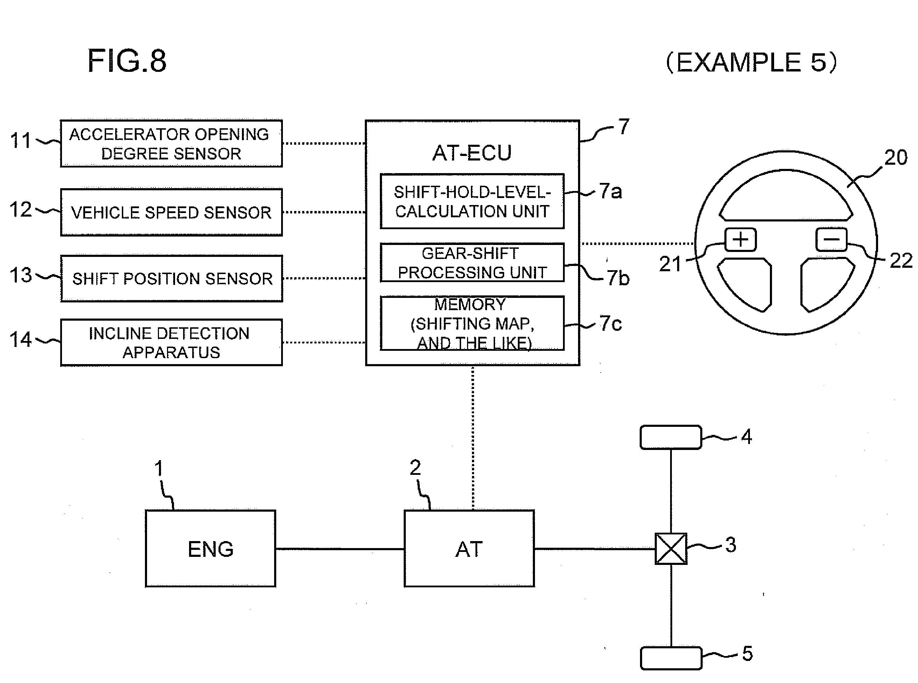

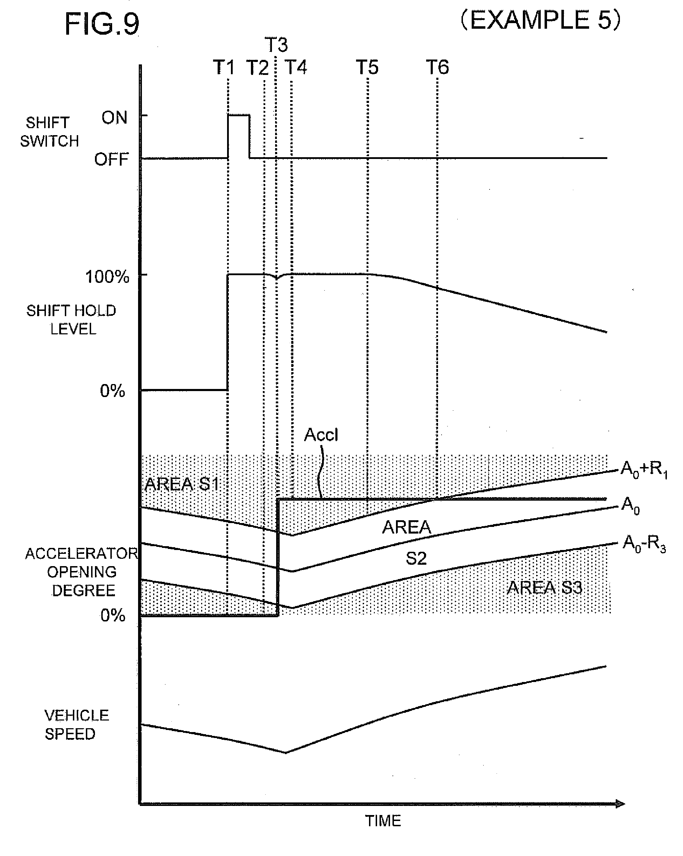

The gear-shift control apparatus for an automatic transmission of a fifth example of the present invention will be explained using the drawings. FIG. 8 is a block diagram that schematically illustrates the construction of a vehicle that includes the gear-shift control apparatus for an automatic transmission of a fifth example of the present invention. FIG. 9 is a time chart for explaining the change in the shift hold level that is calculated by the gear-shift control apparatus for an automatic transmission of this fifth example of the present invention.

This fifth example is an example of a variation of the calculation process for calculating the shift hold level by shift-hold-level-calculation unit (7a in FIG. 1) of the gear-shift control apparatus for an automatic transmission of the first example. In the fifth example, [1] when the shift hold level is greater than 0% in a state where the automobile is traveling at constant speed (in coasting) or accelerating on a flat road and the amount that the accelerator pedal is pressed is constant, the shift hold level is changed in the direction of normal automatic transmission (shift hold level 0% side); [2] when the shift hold level is greater than 0% even in a state where the automobile is accelerating on an uphill road, or accelerating on a downhill road and the amount that the accelerator pedal is pressed is constant, the shift hold level is changed in the direction toward normal automatic transmission (shift hold level 0% side); and [3] when the shift hold level is greater than 0% and less than 100% in other states, the shift hold level is changed in the direction toward 100%. The fifth example differs from the first example (see FIG. 1) in that a gradient detection device (14 in FIG. 8) that detects (can also calculate) the gradient (incline) of the road is added. The operation and construction for other than the process for calculating the shift hold level is the same as in the first example. This fifth example can also be applied to the second and third examples.

The gradient detection device 14 is a device that detects the gradient (incline) of the road over which the automobile is traveling. It is possible to use, for example, a gyrocompass that detects gradient using the gyroscopic effect as the gradient detection device 14, or it is also possible to use a device that estimates (calculates) the gradient based on the driving power of the engine, the vehicle speed, and the vehicle weight. The gradient detection device 14 is connected so that communication with the electronic controller 7 is possible. Information related to the gradient that was detected by the gradient detection device 14 is used in the process by the electronic controller 7 for calculating the shift hold level.

As in the first example, the shift-hold-level-calculation unit 7a performs calculation to reduce the shift hold level toward 0% when it is okay to return to the normal automatic transmission state (automatic-transmission mode), and on the other hand, performs calculation to increase the shift hold level toward 100% when shifting should be held (manual-transmission mode). Moreover, the shift-hold-level-calculation unit 7a, as in the first example, forcibly sets the shift hold level to 100% when shifting of the automatic transmission 2 is performed by the gear-shift processing unit 7b according to an ON operation of the up-shift switch 21 or down-shift switch 22 (an up-shift operation or down-shift operation using the shift lever is also possible). As in the first example, when the shift hold level is 0%, and when operation of the up-shift switch 21 or down-shift switch 22 is not performed (this could be an up-shift or down-shift operation by the shift lever), it can be said that the driver has no intention to perform manual shifting, so the shift-hold-level-calculation unit 7a fixes the shift hold level as is at 0% in order to maintain the automatic-transmission mode. The shift hold level that is calculated by the shift-hold-level-calculation unit 7a is used when shifting is performed by the gear-shift processing unit 7b.

An example of the calculation process for calculating the shift hold level will be given.

When calculating the shift hold level, the shift-hold-level-calculation unit 7a, based on the vehicle speed that is detected by the vehicle speed sensor 12, calculates the accelerator opening degree $A_0$ that is necessary for the vehicle to travel at constant speed, and based on the calculated accelerator opening degree $A_0$ and the gradient calculated by the gradient detection device 14, calculates the upper limit value $(A_0 + R_1)$ and the lower limit value $(A_0 - R_3)$ of the accelerator opening degree necessary for traveling at constant speed. $R_1$ and $R_3$ are positive values.

Here, the accelerator opening degree $A_0$ that is necessary for traveling at constant speed depends on the vehicle speed, and is in a relationship where as the vehicle speed increases, the accelerator opening degree $A_0$ increases. $R_1$ at the upper limit value of the accelerator opening degree necessary for traveling at constant speed depends on the absolute value of the incline, and is in a relationship where as the absolute value of the gradient increases, $R_1$ increases. $R_3$ at the lower limit value of the accelerator opening degree necessary for traveling at constant speed depends on the absolute value of the gradient, and is in a relationship where as the absolute value of the gradient increases, $R_3$ decreases.

The shift-hold-level-calculation unit 7a performs calculation so that [0] when the actual accelerator opening degree (value detected by the accelerator opening degree sensor 11) is equal to or greater than the upper limit value $(A_0 + R_1)$ of the accelerator opening degree, and the shift hold level is greater than 0% and less than 100%, [Equation 10] is used and the shift hold level is changed according to the absolute value of the difference between the actual accelerator opening degree and the upper limit value $(A_0 + R_1)$ of the accelerator opening degree necessary for traveling at constant speed, and according to the absolute value of the amount of change that the accelerator pedal is pressed (actual accelerator opening degree) (see a range of T3 to T6 in FIG. 9). Here, $L_1$ is the current shift hold level, $L_0$ is the previous shift hold level, $K_{01}$, $K_{02}$ and $K_{03}$ [%/sec] are arbitrary positive constants, $|\Delta Accl|$ is the absolute value of the amount of change in the amount the accelerator pedal is pressed (actual accelerator opening degree), Accl is the accelerator opening degree (amount the accelerator has been pressed), $A_0$ is the accelerator opening degree necessary for traveling at constant speed, and $A_0 + R_1$ is the upper limit value of the accelerator opening degree necessary for traveling at constant speed ($R_1$ is a positive value). When "$K_{01} > K_{02} |\Delta Accl| + K_{03} |\Delta Accl - (A_0 + R_1)|$", the current shift hold level $L_1$ changes in the direction toward the shift hold level 0% side (normal automatic transmission (see a range of T5 to T6 in FIG. 9), when "$K_{01} < K_{02} |\Delta Accl| + K_{03} |\Delta Accl - (A_0 + R_1)|$", the current shift hold level $L_1$ in the direction toward the shift hold level 100% side (shift hold) (see a range of T3 to T4 in FIG. 9), and when "$K_{01} = K_{02} |\Delta Accl| + K_{03} |\Delta Accl - (A_0 + R_1)|$", the current shift hold level $L_1$ is the same as the previous shift hold level $L_0$ (see T5 in FIG. 9). When the accelerator pedal is being pressed in order to accelerate on a uphill slope , there is a possibility that the driver desires to perform manual shifting, so the absolute value Accl - $(A_0 + R_1)$ | of the difference between the actual accelerator opening degree and the upper limit $(A_0 + R_1)$ of the accelerator opening degree necessary for traveling at constant speed functions so as to change the current shift hold level $L_1$ to the shift hold level 100% (shift hold) side. When the amount that the accelerator is pressed is always changing such as during traveling on a winding road, there is a possibility that the driver desires to perform manual shifting, so the absolute value $|\Delta Accl|$ of the amount of change in the amount that the accelerator pedal is pressed (actual accelerator opening degree) functions so that the current shift hold level $L_1$ changes to the shift hold level 100% (shift hold) side. The current shift hold level $L_1$ is taken to be 100% when according to [Equation 10] it is 100% or greater (refer to T4 to T5 in FIG. 9), and is taken to be 0% when it is 0% or less.

[Equation 10]

$$_1 = L_0 - K_{01} + K_{02}\,|\,\Delta Accl\,| \; + K_{03}\,|\,Accl - (A_0 + R_1)\,|$$

Where:

L$_1$: Current shift hold level
L$_0$: Previous shift hold level
K$_{01}$, K$_{02}$, K$_{03}$: Arbitrary positive constants
$|\Delta Accl|$ : Absolute value of the amount of change of the actual accelerator opening degree
Accl: Actual accelerator opening degree
A$_0$: Accelerator opening degree necessary for traveling at constant speed A$_0$ + R$_1$: Upper limit value of the accelerator opening degree necessary for traveling at constant speed (R$_1$ is a positive value)

The shift-hold-level-calculation unit 7a performs calculation using [Equation 11] below so that [1[ when the actual accelerator opening degree (value detected by the accelerator opening degree sensor 11 is between the upper limit value (A$_0$ + R$_1$) and the lower limit value (A$_0$ - R$_3$) of the accelerator opening degree and the shift hold level is greater than 0% and less than 100%, the shift hold level changes according to the absolute value of the amount of change in the amount that the accelerator pedal is pressed (actual accelerator opening degree) (refer to T6 and later in FIG. 9). Here, L$_1$ is the current shift hold level, L0 is the previous shift hold level, K$_{11}$ and K$_{12}$ [%/sec] are arbitrary positive constants, and $|\Delta Accl|$ is the absolute value of the amount of change in the amount that the accelerator is pressed (actual accelerator opening degree). When "K$_{11}$ > K$_{12}$ $|\Delta Accl|$", the current shift hold level L$_1$ changes in the direction toward the shift hold level 0% (normal automatic transmission) side (refer to T6 and later in FIG. 9); when "K$_{11}$ < K$_{12}$ $|\Delta Accl|$", the current shift hold level L$_1$ changes in the direction toward the shift hold level 100% (shift hold) side; and when "K$_{11}$ = K$_{12}$$|\Delta Accl|$", the current shift hold level L$_1$ is the same as the shift hold level L$_0$. When the amount that the accelerator pedal is pressed is always changing such as during traveling over a winding road, there is a possibility that the driver desires to perform manual shifting, so the absolute value $|\Delta Accl|$ of the amount of change in the amount that the accelerator pedal is pressed (actual accelerator opening degree) acts such that the current shift hold level L$_1$ changes to the shift hold level 100% (shift hold) side. When the amount that the accelerator pedal is pressed is constant ($|\Delta Accl|$ = 0), the current shift hold level L$_1$ changes toward the shift hold level 0% (normal automatic transmission) side as in the first example (see T6 and later in FIG. 9). The current shift hold level L$_1$ is taken to be 100% when according to [Equation 11] it is 100% or greater, and is taken to be 0% when it is 0% or less.
[Equation 11]

$$L_1 = L_0 - K_{11} + K_{12}\,|\,\Delta Accl\,|$$

Where:

L$_1$: Current shift hold level
L$_0$: Previous shift hold level
K$_{11}$, K$_{12}$: Arbitrary positive constant
$|\Delta Accl|$: Absolute value of the amount of change in the actual accelerator opening degree

The shift-hold-level-calculation unit 7a uses [Equation 12] below to perform calculation so that [2] when the actual accelerator opening degree (value detected by the accelerator opening degree sensor 11) is equal to or less than the lower limit value of the accelerator opening degree (A0 - R3) (accelerator OFF state; including the state of returning the accelerator pedal), and when the shift hold level is greater than 0% and less than 100%, the shift hold level changes according to the absolute value of the amount of change in the difference between the actual accelerator opening degree and the lower limit value (A$_0$ - R$_3$) that is necessary for traveling at constant speed, and the absolute value of the amount of change in the amount that the accelerator pedal is pressed (actual accelerator opening degree) (refer to a range of T2 to T3 in FIG. 9). Here, L$_1$ is the current shift hold level, L$_0$ is the previous shift hold level, K$_{21}$, K$_{22}$ and K$_{23}$ [%/sec] are arbitrary positive constants, $|\Delta Acc1|$ is the absolute value of the amount of change in the amount that the accelerator pedal has been pressed (actual accelerator opening degree), Accl is the accelerator opening degree (amount that the accelerator has been pressed), Ao is the accelerator opening degree necessary for traveling at constant speed, and A$_0$

- $R_3$ is the lower limit value of the accelerator opening degree necessary for traveling at constant speed ($R_3$ is a positive value). The larger $|\Delta Accl|$ and/or $|Accl - (A_0 - R_3)|$ becomes, a speed at which the current shift hold level L1 changes in the direction toward the shift hold level 100% (shift hold) side increases. When the depressing on the accelerator pedal is lessened or returned such as when applying an engine break during going downhill, there is a possibility that the driver desires to perform manual shifting, so the absolute value Accl - (A0 - R3)| of the difference between the actual accelerator opening degree and the lower limit value (A0 - R3) of the accelerator opening degree necessary for traveling at constant speed functions such the current shift hold level $L_1$ changes to the shift hold level 100% (shift hold) side. When the amount that the accelerator pedal is pressed is always changing such as during traveling on a winding road, there is a possibility that the driver desires to perform manual shifting, so the absolute value $|\Delta Accl|$ of the amount of change in the amount that the accelerator pedal is pressed (actual accelerator opening degree) function such that the current shift hold level $L_1$ changes to the shift hold level 100% (shift hold) side. When the current shift hold level L1 is equal to or greater than 100% according to [Equation 12], it is taken to be 100% (refer to a range of T1 to T2 in FIG. 9). Moreover, when the shift hold level is 0% even in the accelerator OFF state, the shift hold level is not updated unless there is an up-shift switch 21 or down-shift switch 22 operation, so the shift hold level is fixed at 0% (refer to T1 and earlier in FIG. 9).

$$[\text{Equation 12}]$$
$$L_1 = L_0 + K_{21} - K_{22}\,|\Delta Accl| + K_{23}\,|Accl - (A_0 - R_3)|$$

$L_1$: Current shift hold level
$L_0$: Previous shift hold level
$K_{21}$, $K_{22}$, $K_{23}$: Arbitrary positive constants
$|\Delta Accl|$: Absolute value of the amount of change in the actual accelerator opening degree
Accl: Actual accelerator opening degree (amount the accelerator is pressed)
$A_0$: Accelerator opening degree necessary for traveling at constant speed
$A_0 - R_3$: Upper limit of the accelerator opening degree necessary for traveling at constant speed ($R_3$ is a positive constant)

The shift hold level that is calculated as described above is changed or updated according to the flowchart in FIG. 4, and is used when the gear-shift processing unit 7b is performing shifting control.

With the fifth example, together with obtaining the same effect as in the first example, it is possible to obtain shifting that reflects the implicit intention of the driver when the vehicle is traveling over a road with an incline by calculating the shift hold level according to the incline of the road, the vehicle speed, the accelerator opening degree, and the absolute value of the amount of change in the amount that the accelerator pedal is pressed.

The disclosures of the Patent Literatures above are incorporated in this specification by reference thereto. Examples and changes and modifications to the examples are possible within the framework and the fundamental technical scope of the entire disclosure of the present invention (including claims and drawings). Moreover, various combinations and selections of the disclosed elements are possible within the scope of the claims of the present invention. In other words, the present invention includes all variations and modifications that can be obtained by one skilled in the art according to the entire disclosure, including the claims, and the technical scope of the invention.

[Reference Signs List]

| | |
|---|---|
| 1 | Engine |
| 2 | Automatic transmission |
| 3 | Differential gear |
| 4, 5 | Drive wheel |
| 7 | Electronic controller (gear-shift control apparatus) |
| 7a | Shift-hold-level-calculation unit |
| 7b | Gear-shift processing unit |
| 7c | Memory |
| 11 | Accelerator opening degree sensor |
| 12 | Vehicle speed sensor |
| 13 | Shift position sensor |

14      Gradient detection device
20      Steering
21      Up-shift switch (shift switch)
22      Down-shift switch (shift switch)

**Claims**

1.  A gear-shift control apparatus for an automatic transmission, comprising:

    a shift-hold-level-calculation unit that calculates a shift hold level that varies between 0% representing a complete automatic transmission state and 100% representing a complete manual transmission state according to operation by a driver; and
    a gear-shift processing unit that controls shifting of an automatic transmission based on the shift hold level that was calculated by an shift-hold-level-calculation unit.

2.  The gear-shift control apparatus for an automatic transmission according to claim 1, wherein
    the shift-hold-level-calculation unit performs calculation so that the shift hold level is forcibly changed to 100% when an ON operation is performed by a shift switch or a shift lever; and
    the gear-shift processing unit performs gear-shift control of the automatic transmission when an ON operation is performed by the shift switch or shift lever.

3.  The gear-shift control apparatus for an automatic transmission according to claim 1 or 2, wherein
    the gear-shift control apparatus comprises a sensor that detects accelerator opening degree; and
    the shift-hold-level-calculation unit
    performs calculation so that when the accelerator opening degree that is detected by the sensor is equal to or greater than a threshold value, and the shift hold level is greater than 0%, the shift hold level is changed so as to approach 0%; and
    performs calculation so that when the accelerator opening degree that is detected by the sensor is less than the threshold value, and the shift hold level is greater than 0% and less than 100%, the shift hold level is changed so as to approach 100%.

4.  The gear-shift control apparatus for an automatic transmission according to claim 1 or 2, wherein
    the gear-shift control apparatus comprises a sensor that detects accelerator opening degree; and
    the shift-hold-level-calculation unit
    performs calculation so that when the accelerator opening degree that is detected by the sensor is equal to or greater than a threshold value, and the shift hold level is greater than 0%, the shift hold level is changed according to the amount of change in the accelerator opening degree; and
    performs calculation so that when the accelerator opening degree that is detected by the sensor is less than the threshold value, and the shift hold level is greater than 0% and less than 100%, the shift hold level is changed so as to approach 100%.

5.  The gear-shift control apparatus for an automatic transmission according to claim 1 or 2, wherein
    the gear-shift control apparatus comprises a sensor that detects the accelerator opening degree; and
    the shift-hold-level-calculation unit
    calculates, based on vehicle speed and gradient of a road, an upper-limit value and a lower-limit value for the accelerator opening degree necessary for a vehicle to travel at a constant speed;
    performs calculation so that when the accelerator opening degree that is detected by the sensor is equal to or greater than upper-limit value, and the shift hold level is greater than 0% and less than 100%, the shift hold level is changed according to a difference between the accelerator opening degree and the upper-limit value, and the amount of change in the accelerator opening degree;
    performs calculation so that when the accelerator opening degree is between the upper-limit value and the lower-limit value, and the shift hold level is greater than 0% and less than 100%, the shift hold level is changed according to the amount of change in the accelerator opening degree; and
    performs calculation so that when the accelerator opening degree is equal to or less then the lower-limit value, and the shift hold level is greater than 0% and less than 100%, the shift hold level is changed according to a difference between the accelerator opening degree and the lower-limit value, and an absolute value of the amount of change in the accelerator opening degree.

6. The gear-shift control apparatus for an automatic transmission according to any one of claims 1 to 5, wherein
the gear-shift control apparatus comprises a sensor that detects accelerator opening degree; and
the gear-shift processing unit, based on the shift hold level that was calculated by the shift-hold-level calculation unit, selects a corresponding shifting line from among a plurality of preset shifting lines, and based on the selected shifting line, performs gear-shift control according to the accelerator opening degree detected by the sensor, and vehicle speed.

7. The gear-shift control apparatus for an automatic transmission according to any one of claims 1 to 5, wherein
the gear-shift control apparatus comprises a sensor that detects accelerator opening degree; and
the gear-shift processing unit, based on a plurality of preset shifting lines, calculates shifting point(s) according to the shift hold level that was calculated by the shift-hold-level-calculation unit, and the accelerator opening degree that was detected by the sensor, and selects a corresponding shifting line from among a plurality of preset shifting lines, and based on the calculated shifting point(s), performs gear-shift control according to vehicle speed.

8. The gear-shift control apparatus for an automatic transmission according to any one of claims 1 to 5, wherein
the gear-shift control apparatus comprises a sensor that detects accelerator opening degree; and
the gear-shift processing unit, based on the shift hold level that was calculated by the shift-hold-level-calculation unit, corrects the accelerator opening degree that was detected by the sensor, and based on preset shifting lines, performs gear-shift control according to the corrected accelerator opening degree and vehicle speed.

# FIG.1

(EXAMPLE 1)

- 11 — ACCELERATOR OPENING DEGREE SENSOR
- 12 — VEHICLE SPEED SENSOR
- 13 — SHIFT POSITION SENSOR

AT-ECU — 7
- SHIFT-HOLD-LEVEL-CALCULATION UNIT — 7a
- GEAR-SHIFT PROCESSING UNIT — 7b
- MEMORY (SHIFTING MAP, AND THE LIKE) — 7c

- 20
- 21
- 22

- 1 — ENG
- 2 — AT
- 3
- 4
- 5

EP 2 554 875 A1

## FIG.2

(EXAMPLE 1)

EP 2 554 875 A1

FIG.3 (EXAMPLE 1)

EP 2 554 875 A1

# FIG.4                    （EXAMPLE 1）

START

~A1
THE DOWN-
SHIFT SWITCH ON?

NO

YES

~A3
THE UP-SHIFT
SWITCH ON?

NO

YES

~A2
SHIFT DOWN 1 GEAR.

~A4
SHIFT UP 1 GEAR.

~A6
IS THE SHIFT
HOLD LEVEL > 0%?

NO

YES

~A5
SET THE SHIFT
HOLD LEVEL TO 100%.

~A7
SHIFT HOLD LEVEL
UPDATE

~A8
SHIFTING LINE
PROCESS

RETURN

22

# FIG.5

(EXAMPLE 2)

FIG.6                                                    (EXAMPLE 3)

EP 2 554 875 A1

FIG.7

(EXAMPLE 4)

EP 2 554 875 A1

# FIG.8

(EXAMPLE 5)

- 11 — ACCELERATOR OPENING DEGREE SENSOR
- 12 — VEHICLE SPEED SENSOR
- 13 — SHIFT POSITION SENSOR
- 14 — INCLINE DETECTION APPARATUS

AT-ECU — 7
- SHIFT-HOLD-LEVEL-CALCULATION UNIT — 7a
- GEAR-SHIFT PROCESSING UNIT — 7b
- MEMORY (SHIFTING MAP, AND THE LIKE) — 7c

20
21 — + — 22

1 — ENG
2 — AT
3
4
5

EP 2 554 875 A1

EP 2 554 875 A1

# FIG.9                    (EXAMPLE 5)

T3

T1  T2  T4      T5      T6

SHIFT SWITCH — ON / OFF

SHIFT HOLD LEVEL — 100% / 0%

Accl

AREA S1

$A_0 + R_1$

$A_0$

AREA S2

$A_0 - R_3$

AREA S3

ACCELERATOR OPENING DEGREE — 0%

VEHICLE SPEED

TIME

## INTERNATIONAL SEARCH REPORT

| International application No. |
| --- |
| PCT/JP2011/056323 |

**A. CLASSIFICATION OF SUBJECT MATTER**
*F16H61/02*(2006.01)i

According to International Patent Classification (IPC) or to both national classification and IPC

**B. FIELDS SEARCHED**

Minimum documentation searched (classification system followed by classification symbols)
F16H61/02

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 2004-270833 A  (JATCO Ltd.),<br>30 September 2004 (30.09.2004),<br>paragraphs [0033] to [0045]; fig. 1 to 4<br>(Family: none) | 1-3<br>4,6,8<br>5 |
| X<br>Y<br>A | JP 2007-120703 A  (Honda Motor Co., Ltd.),<br>17 May 2007 (17.05.2007),<br>paragraphs [0023] to [0152]; fig. 1 to 15<br>& US 2007/0099752 A1    & DE 102006050314 A1 | 1-3<br>4,7-8<br>5 |
| X<br>Y | JP 2007-155025 A  (Toyota Motor Corp.),<br>21 June 2007 (21.06.2007),<br>paragraphs [0044] to [0107]; fig. 1 to 11<br>(Family: none) | 1-2<br>8 |

[X] Further documents are listed in the continuation of Box C.  [ ] See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>16 June, 2011 (16.06.11) | Date of mailing of the international search report<br>28 June, 2011 (28.06.11) |
| --- | --- |
| Name and mailing address of the ISA/<br>Japanese Patent Office | Authorized officer |
| Facsimile No. | Telephone No. |

**INTERNATIONAL SEARCH REPORT**

| International application No. |
|---|
| PCT/JP2011/056323 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 2002-243031 A (JATCO Ltd.), 28 August 2002 (28.08.2002), entire text; all drawings (Family: none) | 1-2 |
| X | JP 2007-198413 A (Nissan Motor Co., Ltd.), 09 August 2007 (09.08.2007), entire text; all drawings (Family: none) | 1-2 |
| Y | JP 2010-60060 A (Toyota Motor Corp.), 18 March 2010 (18.03.2010), paragraph [0070] (Family: none) | 4,6-8 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010071248 A
- JP 2002349687 A
- JP H9203457 B